# EUROPEAN PATENT APPLICATION

(11) **EP 2 768 064 A1**
(43) Date of publication of application: **20.08.2014**
(21) Application number: 13155462.8
(22) Date of filing: 15.02.2013
(51) Int. Cl.: H01M 10/0525, H01M 10/0567, H01M 10/0568, H01M 10/0569, H01M 4/587

(54) **Use of substituted alkynyl sulfonates, carbonates and oxalates as additives in electrolytes of secondary lithium-ion batteries**

(71) Applicant: BASF SE, 67056 Ludwigshafen (DE)
(72) Inventor: Garsuch, Arnd, 67063 Ludwigshafen (DE); Porta Garcia, Marta, 68165 Mannheim (DE); Windlin, Franz Niklaus, 69120 Heidelberg (DE); Schmidt, Michael, 64342 Seeheim-Jugenheim (DE); Arndt, Jan-Dirk, 68167 Mannheim (DE)

(57) **Abstract**

The present invention relates to an electrolyte composition (A) containing
(i) at least one aprotic organic solvent,
(ii) at least one conducting salt, and
(iii) at least one compound of formula (I), 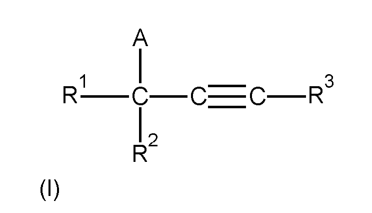 (iv) optionally at least one further additive.

The present invention further relates to the use of compounds of formula (I) as additive in electrolytes for electrochemical cells and to electrochemical cells comprising the inventive electrolyte composition (A).

## Description

The present invention relates to an electrolyte composition (A)
(i) at least one aprotic organic solvent,
(ii) at least one conducting salt, and
(iii) at least one compound of formula (I), 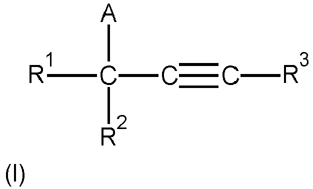 wherein
   - R¹: is selected from F, C₁-C₁₀ alkyl, C₂-C₁₀ alkenyl, C₂-C₁₀ alkinyl, C₃-C₁₀ cycloalkyl, C₆-C₁₄ aryl and C₅-C₁₄ heteroaryl, wherein alkyl, alkenyl, alkinyl, cycloalkyl, aryl, and heteroaryl may be substituted by one or more A, F, C₁-C₄ alkyl, phenyl, benzyl and/or C₁-C₄ alkyl substituted by one or more F,
   - R²: is selected from H, F, C₁-C₁₀ alkyl, C₂-C₁₀ alkenyl, C₂-C₁₀ alkinyl, C₃-C₁₀ cycloalkyl, C₆-C₁₄ aryl, and C₅-C₁₄ heteroaryl, wherein alkyl, alkenyl, alkinyl, cycloalkyl, aryl and heteroaryl may be substituted by one or more A, F, C₁-C₄ alkyl, phenyl, benzyl and/or C₁-C₄ alkyl substituted by one or more F,
   - wherein R¹ and R²: may form together with the joining C-atom a 5- to 7-membered saturated or unsaturated hydrocarbon cycle,
   - R³: is selected from H, and C₁-C₁₀ alkyl, wherein alkyl may be substituted by one or more F and/or A,
   - A: is selected from OS(O)₂R⁴, OC(O)OR⁵and OC(O)C(O)OR⁶,
   - R⁴, R⁵ and R⁶: are selected from C₁-C₁₀ alkyl, C₂-C₁₀ alkenyl, C₂-C₁₀ alkinyl, C₃-C₁₀ cycloalkyl, C₆-C₁₄ aryl and C₅-C₁₄ heteroaryl, wherein alkyl, alkenyl, alkinyl, cycloalkyl, aryl and heteroaryl may be substituted by one or more OS(O)₂R⁷, OC(O)OR⁸, OC(O)C(O)OR⁹, F, C₁-C₄ alkyl, phenyl, benzyl and/or C₁-C₄ alkyl substituted by one or more F, and
   - R⁷, R⁸ and R⁹: are selected from C₁-C₁₀ alkyl,
(iv) optionally at least one further additive.

The present invention further relates to the use of compounds of formula (I) as additive in electrolytes for electrochemical cells and to electrochemical cells comprising the inventive electrolyte composition (A).

Storing energy has long been a subject of growing interest. Electrochemical cells, for example batteries or accumulators, can serve to store electrical energy. Lithium ion batteries have attracted particular interest since they are superior to the conventional batteries in several technical aspects. For instance, they provide higher energy densities than accumulators based on lead or comparatively noble heavy metals.

During charge and discharge of lithium ion batteries various reactions take place at different cell potentials. It is known that during the first charging process of a lithium ion battery usually a film is formed on the anode. This film is often called solid electrolyte interface (SEI). The SEI is permeable for lithium ions and protects the electrolyte from direct contact with the anode and vice versa. It is formed by reductive decomposition of components of the electrolyte composition like solvents, e.g. carbonates, esters, ethers and conductive salts on the surface of the anode, especially if the anode active material is a carbonaceous material like graphite. A certain amount of the lithium from the cathode is irreversibly consumed for the formation of the SEI and cannot be replaced. One possibility to reduce the amount of irreversibly consumed lithium is the addition of suitable chemical compounds which are easily decomposed on the anode by reduction and thereby forming a film on the surface of the anode. One well-known compound is vinylene carbonate, see for instance US 5,626,981. Vinylene carbonate forms a stable SEI on a graphite anode in lithium ion batteries. Santner et al., J. Power Sources, 2003, 119 to 121, pages 368 to 372 reports the use of acrylonitrile in propylene carbonate as film forming additive in lithium ion secondary batteries having a graphite anode and LiMn₂O₄ as cathode active material. K. Abe et al., J. Electrochem. Soc., 2007, 154 (8), pages A810 to A815 and K. Abe et al., J. Power Sources, 2008, 184, pages 449 to 455 describe the use of triple-bonded compounds like propargyl methane sulfonate and propargyl methyl carbonate in 1 M LiPF₆ [ethylene carbonate/methylethylcarbonate] and [propylene carbonate/methylethylcarbonate]. Nevertheless, the demand for suited additives for lithium ion secondary batteries is still present.

It was thus an object of the present invention to provide an additive for electrolytes for lithium ion batteries enhancing the long time stability of the electrolyte composition and of the lithium ion battery. A further object of the present invention was to provide an additive for electrolytes for lithium ion batteries which allows using the electrolyte composition and the lithium ion battery in a broader temperature range.

This object is achieved by an electrolyte composition (A) containing
(i) at least one aprotic organic solvent,
(ii) at least one conducting salt, and
(iii) at least one compound of formula (I), 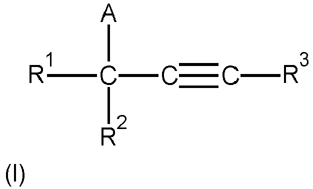 wherein

- R¹: is selected from F, C₁-C₁₀ alkyl, C₂-C₁₀ alkenyl, C₂-C₁₀ alkinyl, C₃-C₁₀ cycloalkyl, C₆-C₁₄ aryl and C₅-C₁₄ heteroaryl, wherein alkyl, alkenyl, alkinyl, cycloalkyl, aryl, and heteroaryl may be substituted by one or more A, F, C₁-C₄ alkyl, phenyl, benzyl and/or C₁-C₄ alkyl substituted by one or more F,
- R²: is selected from H, F, C₁-C₁₀ alkyl, C₂-C₁₀ alkenyl, C₂-C₁₀ alkinyl, C₃-C₁₀ cycloalkyl, C₆-C₁₄ aryl, and C₅-C₁₄ heteroaryl, wherein alkyl, alkenyl, alkinyl, cycloalkyl, aryl and heteroaryl may be substituted by one or more A, F, C₁-C₄ alkyl, phenyl, benzyl and/or C₁-C₄ alkyl substituted by one or more F,
- wherein R¹ and R²: may form together with the joining C-atom a 5- to 7-membered saturated or unsaturated hydrocarbon cycle,
- R³: is selected from H, and C₁-C₁₀ alkyl, wherein alkyl may be substituted by one or more F and/or A,
- A: is selected from OS(O)₂R⁴, OC(O)OR⁵and OC(O)C(O)OR⁶,
- R⁴, R⁵ and R⁶: are selected from C₁-C₁₀ alkyl, C₂-C₁₀ alkenyl, C₂-C₁₀ alkinyl, C₃-C₁₀ cycloalkyl, C₆-C₁₄ aryl and C₅-C₁₄ heteroaryl, wherein alkyl, alkenyl, alkinyl, cycloalkyl, aryl and heteroaryl may be substituted by one or more OS(O)₂R⁷, OC(O)OR⁸, OC(O)C(O)OR⁹, F, C₁-C₄ alkyl, phenyl, benzyl and/or C₁-C₄ alkyl substituted by one or more F, and
- R⁷, R⁸ and R⁹: are selected from C₁-C₁₀ alkyl"
(iv) optionally at least one further additive;

by the use of compounds of formula (I) as additive in electrolytes and by electrochemical cells comprising the inventive electrolyte composition.

The electrolyte composition according to the present invention containing at least one compound of formula (I) shows improved retention of discharge capacity. The compounds of formula (I) seem to have a beneficial effect on the cathode of secondary lithium ion batteries.

The electrolyte composition (A) contains as component (iii) at least one compound of formula (I) as defined above.

The term "C₁-C₁₀ alkyl" as used herein typically means a straight or branched saturated hydrocarbon radical having 1 to 10 carbon atoms and includes, e.g., methyl, ethyl, n-propyl, isopropyl, n-butyl, sec-butyl, isobutyl, tert-butyl, n-pentyl, iso-pentyl, 2,2-dimethylpropyl, n-hexyl, iso-hexyl and the like. Preferred are C₁-C₆ alkyl, more preferred are C₁-C₄ alkyl like methyl, ethyl, n-propyl, isopropyl, n-butyl, sec-butyl, isobutyl, and tert-butyl, especially preferred are 2-propyl, methyl and ethyl.

The term "C₃-C₁₀ cycloalkyl" as used herein typically means a cyclic saturated hydrocarbon radical having 3 to 10 carbon atoms and includes, e.g. cyclopropyl, cyclobutyl, cyclopentyl and cyclohexyl. Preferred are C₃-C₆ cycloalkyl.

The term "C₂-C₁₀ alkenyl" as used herein typically refers to an unsaturated straight or branched hydrocarbon radical having 2 to 10 carbon atoms, i.e. the hydrocarbon radical contains at least one C-C double bond. C₂-C₆ alkenyl includes for example ethenyl, 1-propenyl, 2-propenyl, 1-n-butenyl, 2-n-butenyl, iso-butenyl, 1-pentenyl, 1-hexenyl and the like. Preferred are C₂-C₆ alkenyl.

The term "C₂-C₁₀ alkinyl" as used herein typically refers to an unsaturated straight or branched hydrocarbon radical having 2 to 10 carbon atoms, wherein the hydrocarbon radical contains at least one C-C triple bond. C₂-C₁₀ alkinyl includes for example ethinyl, 1-propinyl, 2-propinyl, 1-n-butinyl, 2-n-butinyl, iso-butinyl, 1-pentinyl, 1-hexinyl and the like. Preferred are C₂-C₆ alkinyl.

The term "C₆-C₁₄ aryl" as used herein denotes an aromatic 6- to 14-membered hydrocarbon monocycle or condensed multiple cycle like phenyl, naphtyl, anthracenyl and the like. A preferred C₅-C₁₄ aryl is phenyl.

The term "C₅-C₁₄ hetero aryl" as used herein denotes an aromatic 5- to 14-membered hydrocarbon monocycle or condensed multiple cycle wherein at least one C-atom may be replaced by N, O or S. Examples of C₅-C₁₄ hetero aryl are pyrrolyl, furanyl, thiophenyl, pyridinyl, pyranyl, thiopyranyl, benzimidazolyl, quinolinyl and the like.

According to one embodiment of the present invention A is OS(O)₂R⁴, i.e. the compound of formula (I) is a propargyl sulfonate derivative.

According to another embodiment of the present invention A is OC(O)OR⁵ , i.e. the compound of formula (I) is a propargyl carbonate derivative.

According to a further embodiment of the present invention A is OC(O)C(O)OR⁶, i.e. the compound of formula (I) is a propargyl oxalate derivative.

R¹ is preferably selected from F, C₁-C₆ alkyl, C₂-C₆ alkenyl, C₂-C₆ alkinyl, C₅-C₇ cycloalkyl, and phenyl, wherein alkyl, alkenyl, alkinyl, cycloalkyl, and phenyl may be substituted by one or more A, F, C₁-C₄ alkyl, phenyl and/or C₁-C₄ alkyl substituted by one or more F. More preferred R¹ is selected from C₁-C₆ alkyl and C₅-C₇ cycloalkyl, wherein alkyl and cycloalkyl may be substituted by one or more A, F, C₁-C₄ alkyl, phenyl and/or C₁-C₄ alkyl substituted by one or more F.

R² is preferably selected from H, F, C₁-C₆ alkyl, C₂-C₆ alkenyl, C₂-C₆ alkinyl, C₅-C₇ cycloalkyl, and phenyl and wherein alkyl, alkenyl, alkinyl, cycloalkyl, and phenyl may be substituted by one or more A, F, C₁-C₄ alkyl, phenyl and/or C₁-C₄ alkyl substituted by one or more F. More preferred R² is selected from H, C₁-C₆ alkyl and C₅-C₇ cycloalkyl, wherein alkyl and cycloalkyl may be substituted by one or more A, F, C₁-C₄ alkyl, phenyl and/or C₁-C₄ alkyl substituted by one or more F.

R¹ and R² may form together with the joining C-atom a 5-to 7-membered saturated or unsaturated hydrocarbon cycle. This cycle may be substituted as described for R¹ and R² above.

R¹ and R² may preferably form together with the joining C-atom a 5- or 6-membered saturated or unsaturated hydrocarbon cycle, more preferred R¹ and R² may form together with the joining C-atom a 6-membered saturated or unsaturated hydrocarbon cycle.

R³ is preferably selected from H and C₁-C₆ alkyl, wherein alkyl may be substituted by one or more F and/or A, and especially preferred from H and C₁-C₄ alkyl, wherein alkyl may be substituted by one or more F and/or A.

R⁴, R⁵ and R⁶ are preferably selected from C₁-C₆ alkyl, C₂-C₆ alkenyl, C₂-C₆ alkinyl, C₅-C₇ cycloalkyl, and phenyl, wherein alkyl, alkenyl, alkinyl, cycloalkyl, and phenyl may be substituted by one or more OS(O)₂R⁷, OC(O)OR⁸, OC(O)C(O)OR⁹, F, C₁-C₄ alkyl, phenyl and/or C₁-C₄ alkyl substituted by one or more F. More preferred R⁴, R⁵ and R⁶ are selected from C₁-C₆ alkyl, wherein alkyl may be substituted by one or more OS(O)₂R⁷, OC(O)OR⁸, OC(O)C(O)OR⁹and/or F.

R⁷, R⁸ and R⁹ are preferably selected from C₁-C₆ alkyl, more preferred R⁷, R⁸ and R⁹ are selected from C₁-C₄ alkyl.

Preferably the at least one compound of formula (I) is selected from compounds of formula (I) with
- R¹: is selected from F, C₁-C₆ alkyl, C₂-C₆ alkenyl, C₂-C₆ alkinyl, C₅-C₇ cycloalkyl, and phenyl, wherein alkyl, alkenyl, alkinyl, cycloalkyl, and phenyl may be substituted by one or more A, F, C₁-C₄ alkyl, phenyl and/or C₁-C₄ alkyl substituted by one or more F,
- R²: is selected from H, F, C₁-C₆ alkyl, C₂-C₆ alkenyl, C₂-C₆ alkinyl, C₅-C₇ cycloalkyl, and phenyl, wherein alkyl, alkenyl, alkinyl, cycloalkyl, and phenyl may be substituted by one or more A, F, C₁-C₄ alkyl, phenyl and/or C₁-C₄ alkyl substituted by one or more F, wherein R¹ and R² may form a 5- or 6-membered saturated or unsaturated hydrocarbon cycle,
- R³: is selected from H and C₁-C₆ alkyl, wherein alkyl may be substituted by one or more F and/or A,
- A: is selected from OS(O)₂R⁴, OC(O)OR⁵ and OC(O)C(O)OR⁶,
- R⁴, R⁵ and R⁶: are selected from C₁-C₆ alkyl, C₂-C₆ alkenyl, C₂-C₆ alkinyl, C₅-C₇ cycloalkyl, and phenyl, wherein alkyl, alkenyl, alkinyl, cycloalkyl, and phenyl may be substituted by one or more OS(O)₂R⁷, OC(O)OR⁸, OC(O)C(O)OR⁹, F, C₁-C₄ alkyl, phenyl and/or C₁-C₄ alkyl substituted by one or more F, and
- R⁷, R⁸ and R⁹: are selected from C₁-C₆ alkyl.

Even more preferred the at least one compound of formula (I) is selected from compounds of formula (I) with
- R¹: is selected from C₁-C₆ alkyl and C₅-C₇ cycloalkyl, wherein alkyl and cycloalkyl may be substituted by one or more A, F, C₁-C₄ alkyl, phenyl and/or C₁-C₄ alkyl substituted by one or more F,
- R²: is selected from H, C₁-C₆ alkyl and C₅-C₇ cycloalkyl, wherein alkyl and cycloalkyl may be substituted by one or more A, F, C₁-C₄ alkyl, phenyl and/or C₁-C₄ alkyl substituted by one or more F, wherein R¹ and R² may form a 6-membered saturated or unsaturated hydrocarbon cycle,
- R³: is selected from H and C₁-C₄ alkyl, wherein alkyl may be substituted by one or more F and/or A,
- A: is selected from OS(O)₂R⁴, OC(O)OR⁵ and OC(O)C(O)OR⁶,
- R⁴, R⁵ and R⁶: are selected from C₁-C₆ alkyl, wherein alkyl may be substituted by one or more OS(O)₂R⁷, OC(O)OR⁸, OC(O)C(O)OR⁹ and/or F, and
- R⁷, R⁸ and R⁹: are selected from C₁-C₄ alkyl.

Preferred compounds of formula (I) are selected from 1-methyl-propargyl methanesulfonate, 1-ethyl-propargyl methanesulfonate, 1-n-propyl-propargyl methanesulfonate, 1-i-propyl-propargyl methanesulfonate, 1-cyclohexyl-propargyl methanesulfonate, 1-methyl-propargyl methylcarbonate, 1-ethyl-propargyl methylcarbonate, 1-n-propyl-propargyl methylcarbonate, 1-i-propyl-propargyl methylcarbonate, and 1-cyclohexyl-propargyl methylcarbonate.

In one embodiment of the invention the compounds of formula (I) contain at least one F.

The electrolyte composition (A) contains at least one aprotic organic solvent (i), preferably at least two aprotic organic solvents (ii) and more preferred at least three aprotic organic solvents (i). According to one embodiment the electrolyte composition (A) may contain up to ten aprotic organic solvents (i).

The at least one aprotic organic solvent (i) is preferably selected from
(a) cyclic and noncyclic organic carbonates, which may be partly halogenated,
(b) di-C₁-C₁₀-alkylethers, which may be partly halogenated,
(c) di-C₁-C₄-alkyl-C₂-C₆-alkylene ethers and polyethers, which may be partly halogenated,
(d) cyclic ethers, which may be partly halogenated,
(e) cyclic and acyclic acetales and ketales, which may be partly halogenated,
(f) orthocarboxylic acids esters, which may be partly halogenated,
(g) cyclic and noncyclic esters of carboxylic acids, which may be partly halogenated,
(h) Cyclic and noncyclic sulfones, which may be partly halogenated,
(i) Cyclic and noncyclic nitriles and dinitriles, which may be partly halogenated, and
(j) Ionic liquids, which may be partly halogenated.

The aprotic organic solvents (a) to (j) may be partly halogenated, e.g. they may be partly fluorinated, partly chlorinated or partly brominated, and preferably they may be partly fluorinated. "Partly halogenated" means, that one or more H of the respective molecule is substituted by a halogen atom, e.g. by F, Cl or Br. Preference is given to the substitution by F. The at least one solvent (i) may be selected from partly halogenated and non-halogenated aprotic organic solvents (a) to (j), i.e. the electrolyte composition may contain a mixture of partly halogenated and non-halogenated aprotic organic solvents.

More preferred the at least one aprotic organic solvent (i) is selected from cyclic and noncyclic organic carbonates (a), di-C₁-C₁₀-alkylethers (b), di-C₁-C₄-alkyl-C₂-C₆-alkylene ethers and polyethers (c) and cyclic und acyclic acetales and ketales (e), even more preferred electrolyte composition (A) contains at least one aprotic organic solvent (i) selected from cyclic and noncyclic organic carbonates (a) and most preferred electrolyte composition (A) contains at least two aprotic organic solvents (i) selected from cyclic and noncyclic organic carbonates (a), in particular electrolyte composition (A) contains at least one cyclic organic carbonate (a) and at least one noncyclic organic carbonate (a) e.g. ethylene carbonate and diethylcarbonate. The aforementioned preferred organic aprotic solvents may be also partly halogenated, preferably partly fluorinated.

Examples of suitable organic carbonates (a) are cyclic organic carbonates according to the general formula (a1), (a2) or (a3) 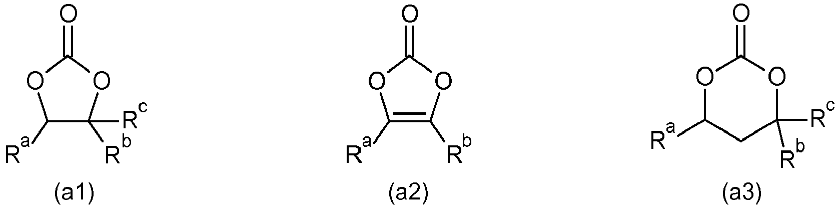 wherein
R^{a}, R^{b} und R^{c} being different or equal and being independently from each other selected from hydrogen, C₁-C₄-alkyl, preferably methyl; F, and C₁-C₄-alkyl substituted by one or more F, e.g. CF₃.
"C₁-C₄-alkyl" is intended to include methyl, ethyl, n-propyl, iso-propyl, n-butyl, iso-butyl, sec.-butyl and tert.-butyl.

Preferred cyclic organic carbonates (a) are of general formula (a1), (a2) or (a3) wherein R^{a}, R^{b} and R^{c} are H. Examples are ethylene carbonate, vinylene carbonate, and propylene carbonate. A preferred cyclic organic carbonate (a) is ethylene carbonate. Further preferred cyclic organic carbonate (a) are difluoroethylene carbonate (a4) and monofluoroethylene carbonate (a5) 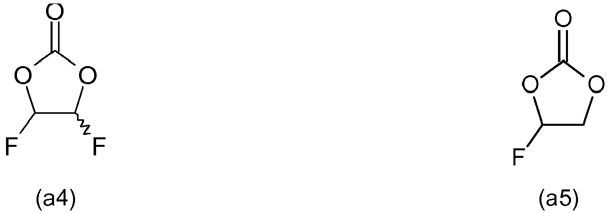 Examples of suitable non-cyclic organic carbonates (a) are dimethyl carbonate, diethyl carbonate, methylethyl carbonate and mixtures thereof.

In one embodiment of the invention the electrolyte composition (A) contains mixtures of non-cyclic organic carbonates (a) and cyclic organic carbonates (a) at a ratio by weight of from 1:10 to 10:1, preferred of from 3:1 to 1:1.

Examples of suitable non-cyclic di-Ci-Cio-alkylethers (b) are dimethylether, ethylmethylether, diethylether, diisopropylether, and di-n-butylether.

Examples of di-C₁-C₄-alkyl-C₂-C₆-alkylene ethers (c) are 1,2-dimethoxyethane, 1,2-diethoxyethane, diglyme (diethylene glycol dimethyl ether), triglyme (triethylenglycol dimethyl ether), tetraglyme (tetraethylenglycol dimethyl ether), and diethylenglycoldiethylether.

Examples of suitable polyethers (c) are polyalkylene glycols, preferably poly-C₁-C₄-alkylene glycols and especially polyethylene glycols. Polyethylene glycols may comprise up to 20 mol% of one or more C₁-C₄-alkylene glycols in copolymerized form. Polyalkylene glycols are preferably dimethyl- or diethyl-end capped polyalkylene glycols. The molecular weight M_{w} of suitable polyalkylene glycols and especially of suitable polyethylene glycols may be at least 400 g/mol. The molecular weight M_{w} of suitable polyalkylene glycols and especially of suitable polyethylene glycols may be up to 5 000 000 g/mol, preferably up to 2 000 000 g/mol.

Examples of suitable cyclic ethers (d) are tetrahydrofurane and 1,4-dioxane.

Examples of suitable non-cyclic acetals (e) are 1,1-dimethoxymethane and 1,1-diethoxymethane. Examples for suitable cyclic acetals (e) are 1,3-dioxane and 1,3-dioxolane.

Examples of suitable orthocarboxylic acids esters (f) are tri-C₁-C₄ alkoxy methane, in particular trimethoxymethane and triethoxymethane.

Examples of suitable noncyclic esters of carboxylic acids (g) are ethyl acetate, methyl butanoate, esters of dicarboxylic acids like 1,3-dimethyl propanedioate. An example of a suitable cyclic ester of carboxylic acids (lactones) is γ-butyrolactone.

Examples of suitable noncyclic sulfones (h) are ethyl methyl sulfone and dimethyl sulfone.

Examples of suitable cyclic and noncyclic nitriles and dinitriles (i) are adipodinitrile, acetonitrile, propionitrile, and butyronitrile.

The inventive electrolyte composition (A) furthermore contains at least one conducting salt (ii). Electrolyte composition (A) functions as a medium that transfers the ions participating in the electrochemical reaction taking place in the electrochemical cell. The conducting salt(s) (ii) present in the electrolyte are usually solvated in the aprotic organic solvent(s) (i). Preferably the conducting salt (ii) is a lithium salt. The conducting salt (ii) is preferably selected from the group consisting of
- Li[F₆₋xP(C_{y}F_{2y+1})ₓ], wherein x is an integer in the range from 0 to 6 and y is an integer in the range from 1 to 20;
- Li[B(R¹⁰)₄], Li[B(R¹⁰)₂(OR¹¹O)] and Li[B(OR¹¹O)₂],
   wherein each R¹⁰ is independently from each other selected from F, Cl, Br, I, C₁-C₄ alkyl, C₂-C₄ alkenyl, C₂-C₄ alkinyl, OC₁-C₄ alkyl, OC₂-C₄ alkenyl, and OC₂-C₄ alkinyl, wherein alkyl, alkenyl, and alkinyl may be substituted by one or more OR¹², wherein R¹² is selected from C₁-C₆ alkyl, C₂-C₆ alkenyl, and C₂-C₆ alkinyl, and
   wherein (OR¹¹O) is a bivalent group derived from a 1,2- or 1,3-diol, from a 1,2- or 1,3-dicarboxlic acid or from a 1,2- or 1,3-hydroxycarboxylic acid, wherein the bivalent group forms a 5- or 6-membered cycle via the both oxygen atoms with the central B-atom;
   - salts of the general formula Li[X(CₙF₂ₙ₊₁SO₂)ₘ], where m and n are defined as follows:
   m = 1 when X is selected from oxygen and sulfur,
   m = 2 when X is selected from nitrogen and phosphorus,
   m = 3 when X is selected from carbon and silicon, and
   n is an integer in the range from 1 to 20,
   - LiClO₄; LiAsF₆; LiCF₃SO₃; Li₂SiF₆; LiSbF₆; LiAlCl₄, lithium tetrafluoro (oxalato) phosphate; and lithium oxalate.

Suited 1,2- and 1,3-diols from which the bivalent group (OR¹¹O) is derived may be aliphatic or aromatic and may be selected, e.g., from 1,2-dihydroxybenzene propane-1,2-diol, butane-1,2-diol, propane-1,3-diol, butan-1,3-diol, cyclohexyl-trans-1,2-diol or naphthalene-2,3-diol which are optionally are substituted by one or more F and/or by at least one straight or branched non fluorinated, partly fluorinated or fully fluorinated C₁-C₄ alkyl group. An example for such 1,2- or 1,3-diol is 1,1,2,2-tetra(trifluoromethyl)-1,2-ethane diol.

Suited 1,2- or 1,3-dicarboxlic acids from which the bivalent group (OR¹¹O) is derived may be aliphatic or aromatic, for example oxalic acid, malonic acid (propane-1,3-dicarboxylic acid), phthalic acid or isophthalic acid, preferred is oxalic acid. The 1,2- or 1,3-dicarboxlic acid are optionally are substituted by one or more F and/or by at least one straight or branched non fluorinated, partly fluorinated or fully fluorinated C₁-C₄ alkyl group.

Suited 1,2- or 1,3-hydroxycarboxylic acids from which the bivalent group (OR¹¹O) is derived may be aliphatic or aromatic, for example salicylic acid, tetrahydro salicylic acid, malic acid, 2-hydroxy acetic acid, which are optionally are substituted by one or more F and/or by at least one straight or branched non fluorinated, partly fluorinated or fully fluorinated C₁-C₄ alkyl group. An example for such 1,2- or 1,3-hydroxycarboxylic acids is 2,2-bis(trifluoromethyl)-2-hydroxy-acetic acid.

Examples of Li[B(R¹⁰)₄], Li[B(R¹⁰)₂(OR¹¹O)] and Li[B(OR¹¹O)₂] are LiBF₄, lithium difluoro oxalato borate and lithium dioxalato borate.

Preferably the at least one conducting salt (ii) is selected from LiPF₆, LiBF₄, and LiPF₃(CF₂CF₃)₃, more preferred the conducting salt (ii) is selected from LiPF₆ and LiBF₄, and the most preferred conducting salt (ii) is LiPF₆.

The at least one conducting salt (ii) is usually present at a minimum concentration of at least 0.01 wt.-%, preferably of at least 0,5 wt.-%, more preferred of at least 1 wt.-%, and most preferred of at least 5 wt.-%, based on the total weight of the electrolyte composition. Usually the upper concentration limit for the at least one conducting salt (ii) is 25 wt.-%, based on the total weight of the electrolyte composition.

Moreover, the inventive electrolyte composition (A) may contain at least one further additive (iv). The at least one further additive (iv) may be selected from the group consisting of vinylene carbonate and its derivatives, vinyl ethylene carbonate and its derivatives, methyl ethylene carbonate and its derivatives, lithium (bisoxalato) borate, lithium difluoro (oxalato) borate, lithium tetrafluoro (oxalato) phosphate, lithium oxalate, 2-vinyl pyridine, 4-vinyl pyridine, cyclic exo-methylene carbonates, sultones, cyclic and acyclic sulfonates, cyclic and acyclic sulfites, cyclic and acyclic sulfinates, organic esters of inorganic acids, acyclic and cyclic alkanes having a boiling point at 1 bar of at least 36 °C, and aromatic compounds, optionally halogenated cyclic and acyclic sulfonylimides, optionally halogenated cyclic and acyclic phosphate esters, optionally halogenated cyclic and acyclic phosphines, optionally halogenated cyclic and acyclic phosphites including, optionally halogenated cyclic and acyclic phosphazenes, optionally halogenated cyclic and acyclic silylamines, optionally halogenated cyclic and acyclic halogenated esters, optionally halogenated cyclic and acyclic amides, optionally halogenated cyclic and acyclic anhydrides, optionally halogenated organic heterocycles.

Examples of suitable aromatic compounds are biphenyl, cyclohexyl benzene and 1,4-dimethoxy benzene.

Sultones may be substituted or unsubstituted. Examples for suitable sultones are propane sultone (iv a), butane sultone (iv b) and propene sultone (iv c) as shown below:

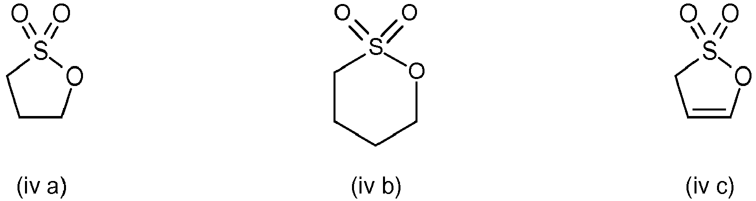

Examples for suitable cyclic exo-methylene carbonates are compound of formula (iv d) 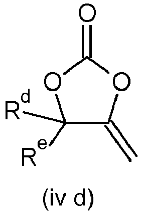 wherein R^{d} and Re may be same or different and are independently from each other selected from C₁-C₁₀ alkyl, and hydrogen. Preferably both R^{d} and R^{d} are methyl. Also preferred both R^{d} and Re are hydrogen. A preferred cyclic exo-methylene carbonate is methylenethylene carbonate.

Furthermore, additive (iv) may be selected from acyclic or cyclic alkanes, preferably alkanes having at a pressure of 1 bar a boiling point of at least 36°C. Examples of such alkanes are cyclohexane, cycloheptane und cyclododecane.

Further compounds suitable as additives (iv) are organic ester of inorganic acids like ethyl ester or methyl ester of phosphoric acid or sulfuric acid.

Additive (iv) is usually selected to be different from the compounds selected as conducting salt (ii), from the compounds selected as organic aprotic solvents (i) and from compounds selected as compounds of formula (I) (iii) present in the respective electrolyte composition (A).

According to one embodiment of the present invention the electrolyte composition contains at least one further additive (iv). If one or more further additives (iv) are present in the electrolyte composition (A), the total concentration of further additives (iv) is at least 0.001 wt.-%, preferred 0.005 to 10 wt.-% and most preferred 0.01 to 5 wt.-%, based on the total weight of the electrolyte composition (A).

The concentration of the at least one compound of formula (I) in the electrolyte composition (A) is usually 0.01 to 2.5 wt.-%, preferred 0.05 to 2 wt.-%, more preferred 0.1 to 1.5 wt.-%, even more preferred 0.1 to 1 wt.-%, and in particular 0.2 to 0.5 wt.-% based on the total weight of the electrolyte composition (A).

The inventive electrolyte composition is preferably essentially water free, i.e. the water content of the inventive electrolyte composition is below 100 ppm, more preferred below 50 ppm, most preferred below 30 ppm. The term "ppm" denotes parts per million based on the weight of the total electrolyte composition. Various methods are known to the person skilled in the art to determine the amount of water present in the electrolyte composition. A method well suited is the titration according to Karl Fischer, e.g. described in detail in DIN 51777 or IS0760: 1978.

The electrolyte composition (A) of the inventive lithium ion battery is preferably liquid at working conditions; more preferred it is liquid at 1 bar and 25 °C, even more preferred the electrolyte composition is liquid at 1 bar and -15 °C, most preferred the electrolyte composition is liquid at 1 bar and -30 °C, and in particular preferred the electrolyte composition is liquid at 1 bar and -50 °C.

In a preferred embodiment of the present invention the electrolyte composition contains at least two aprotic solvents (i) selected from cyclic and noncyclic organic carbonates (a), at least one compound of formula (I), at least one conducting salt (ii) selected from LiBF₄ and LiPF₆, and at maximum up to 100 ppm water.

Preference is further given to electrolyte composition (A), wherein the electrolyte composition contains
(i) from 60 to 99.9 wt.-% of the at least one aprotic organic solvent,
(ii) from 0.1 to 25 wt.-% of the at least one conducting salt,
(iii) from 0.01 to 5 wt.-% of the at least one compound of formula (I), and
(iv) from 0 to 10 wt.-% of the at least one further additive,
based on the total weight of the electrolyte composition.

Secondary Li ion batteries comprising electrolyte composition (A) as described above show increased cycling stability.

A further object of the present invention is the use of one or more compounds of formula (I) as described above as component (iii) of the inventive electrolyte composition (A) as additive in electrolytes for electrochemical cells. Preferably the electrochemical cell is a lithium ion battery. The at least compound of formula (I) is usually used by adding the compound(s) of formula (I) to the electrolyte. Usually the compound of formula (I) is added in amounts yielding electrolyte compositions containing the above described concentrations of compound of formula (I). The compounds of formula (I) are suited as film forming additives, they may form a film on the anode or on the cathode of the electrochemical cell, e.g. on the anode or on the cathode of a lithium ion battery. Therefore, the compounds of formula (I) may be used as film forming additives in electrolytes for electrochemical cells.

Another object of the present invention is a secondary lithium ion battery comprising
(A) the electrolyte composition as described above in detail,
(B) at least one cathode comprising at least one cathode active material, and
(C) at least one anode comprising at least one anode active material.

In the context of the present invention the term "secondary lithium ion battery" means a rechargeable electrochemical cell wherein during discharge lithium ions move from the negative electrode (anode) to the positive electrode (cathode) and during charge the lithium ions move from the positive electrode to the negative electrode, i.e. the charge transfer is performed by lithium ions. Usually lithium ion batteries comprise as cathode active material a transition metal compound capable of occluding and releasing lithium ions, for example transition metal oxide compounds with layer structure like LiCoO₂, LiNiO₂, and LiMnO₂, or transition metal phosphates having olivine structure like LiFePO₄ and LiMnPO₄, or lithium-manganese spinels which are known to the person skilled in the art in lithium ion battery technology. The terms "secondary lithium ion battery", "lithium ion electrochemical cell" and "lithium ion battery" are used interchangeably herein and are intended to have the meaning given above for secondary lithium ion battery.

The term "cathode active material" denotes the electrochemically active material in the cathode, in the case of lithium ion batteries the cathode active material may be a transition metal oxide occluding/releasing lithium ions during charge/discharge of the battery. Depending on the state of the battery, i.e. charged or discharged, the cathode active material contains more or less lithium ions. The term "anode active material" denotes the electrochemically active material in the anode, in the case of lithium ion batteries the anode active material is a material capable of occluding and releasing lithium ions, carbon occluding/releasing the lithium ions during charge/discharge of the battery.

The cathode (B) comprised within the secondary lithium ion batteries of the present invention comprises preferably a cathode active material that can reversibly occlude and release lithium ions. Cathode active materials that can be used include, without being limited to, lithiated transition metal phosphates of olivine structure like LiFePO₄, LiCoPO₄, and LiMnPO₄; lithium ion intercalating transition metal oxides with layer structure like LiMnO₂, LiCoO₂, LiNiO₂ and especially those having the general formula Li_{(1+z)}[NiₐCo_{b}Mn_{c}]_{(1-z)}O₂₊ₑ wherein z is 0 to 0.3, a, b and c may be same or different and are independently 0 to 0.8 wherein a + b + c = 1; and -0.1 ≤ e ≤ 0.1; and lithiated transition metal mixed oxides of spinel structure.

In one preferred embodiment the cathode active material is LiCoPO₄. The cathode containing LiCoPO₄ as cathode active material may also be referred to as LiCoPO₄ cathode. The LiCoPO₄ may be doped with Fe, Mn, Ni, V, Mg, Al, Zr, Nb, TI, Ti, K, Na, Ca, Si, Sn, Ge, Ga, B, As, Cr, Sr, or rare earth elements, i.e., a lanthanide, scandium and yttrium. LiCoPO₄ with olivine structure is particularly suited according the present invention due to its high operating voltage (red-ox potential of 4.8 V vs. Li/Li⁺), flat voltage profile and a high theoretical capacity of about 170mAh/g. The cathode may comprise a LiCoPO₄/C composite material. The preparation of a suited cathode comprising a LiCoPO₄/C composite material is described in Scharabi et al., 2011 and Markevich et al., 2012.

In another preferred embodiment of the present invention the cathode active material is selected from transition metal oxides with layer structure having the general formula Li_{(1+z)}[NiₐCo_{b}Mn_{c}]_{(1-z)}O₂₊ₑ wherein z is 0 to 0.3; a, b and c may be same or different and are independently 0 to 0.8 wherein a + b + c = 1; and -0.1 ≤ e ≤ 0.1. Examples for such transition metal oxides with layer structure include those in which [NiₐCo_{b}M_{c}] is selected from the group Ni_{0.33}Co_{0.33}Mn_{0.33}, Ni_{0.5}5Co_{0.2}Mn_{0.3}, Ni_{0.33}Co₀Mn_{0.66}, Ni_{0.25}Co₀Mn_{0.75}, Ni_{0.35}Co_{0.15}Mn_{0.5}, Ni_{0,21}Co_{0,08}Mn_{0,71} and Ni_{0,22}Co_{0,12}Mn_{0,66}. Preferred are transition metal oxides with layer structure having the general formula Li_{(1+z)}[NiₐCo_{b}Mn_{c}]_{(1-z)}O₂₊ₑ wherein z is 0.05 to 0.3, a = 0.2 to 0.5, b = 0 to 0.3 and c = 0.4 to 0.8 wherein a + b + c = 1; and -0.1 ≤ e ≤ 0.1. Especially preferred the manganese-containing transition metal oxides with layer structure are selected from those in which [NiₐCo_{b}Mn_{c}] is selected from Ni_{0.33}Co₀Mn_{0.66}, Ni_{0.25}Co₀Mn_{0.75}, Ni_{0.35}CO_{0.15}Mn_{0.5}, Ni_{0,21}Co_{0,08}Mn_{0,71} and Ni_{0,22}Co_{0,12}Mn_{0,66}, in particular preferred are Ni_{0,21}Co_{0,08}Mn_{0,71} and Ni_{0,22}Co_{0,12}Mn_{0,66}.

According to a further preferred embodiment of the present invention the cathode active material is selected from lithiated transition metal mixed oxides of spinel structure. Those are those of general formula Li₁₊ₜM₂₋ₜO_{4-d} wherein d is 0 to 0.4, t is 0 to 0.4, while more than 60 mol% of M is manganese. Further M's, from which not more than 30 mol% is chosen, are one or more metals from groups 3 to 12 of the periodic table, for example Ti, V, Cr, Fe, Co, Ni, Zn, Mo, with preference being given to Co and Ni, and especially Ni. An example of a suited manganese-containing spinel of general formula is LiNi_{0,5}Mn_{1,5}O_{4-d}.

Many elements are ubiquitous. For example, sodium, potassium and chloride are detectable in certain very small proportions in virtually all inorganic materials. In the context of the present invention, proportions of less than 0.5% by weight of cations or anions are disregarded. Any lithium ion-containing mixed transition metal oxide comprising less than 0.5% by weight of sodium is thus considered to be sodium-free in the context of the present invention. Correspondingly, any lithium ion-containing mixed transition metal oxide comprising less than 0.5% by weight of sulfate ions is considered to be sulfate-free in the context of the present invention.

The cathode may comprise one or more further constituents. For example, the cathode may comprise carbon in a conductive polymorph, for example selected from graphite, carbon black, carbon nanotubes, expanded graphite, graphene or mixtures of at least two of the aforementioned substances. In addition, the cathode may comprise one or more binders, for example one or more organic polymers like polyethylene, polyacrylonitrile, polybutadiene, polypropylene, polystyrene, polyacrylates, polyisoprene and copolymers of at least two comonomers selected from ethylene, propylene, styrene, (meth)acrylonitrile and 1,3-butadiene, especially styrene-butadiene copolymers, polyvinylidene fluoride (PVdF), polytetrafluoroethylene, copolymers of tetrafluoroethylene and hexafluoropropylene, copolymers of tetrafluoroethylene and vinylidene fluoride and polyacrylnitrile

Furthermore, the cathode may comprise a current collector which may be a metal wire, a metal grid, a metal web, a metal sheet, a metal foil or a metal plate. A suited metal foil is aluminum foil.

According to one embodiment of the present invention the cathode has a thickness of from 25 to 200 µm, preferably of from 30 to 100 µm, based on the whole thickness of the cathode without the thickness of the current collector.

The anode (C) comprised within the secondary lithium ion battery of the present invention comprises preferably an anode active material that can reversibly occlude and release lithium ions. Anode active materials that can be used include, without being limited to, carbonaceous material that can reversibly occlude and release lithium ions. Carbonaceous materials suited are crystalline carbon such as a graphite material, more particularly, natural graphite, graphitized cokes, graphitized MCMB, and graphitized MPCF; amorphous carbon such as coke, mesocarbon microbeads (MCMB) fired below 1500°C, and mesophase pitch-based carbon fiber (MPCF); hard carbon and carbonic anode active material (thermally decomposed carbon, coke, graphite) such as a carbon composite, combusted organic polymer, and carbon fiber.

Further anode active materials are lithium metal, or materials containing an element capable of forming an alloy with lithium. Non-limiting examples of materials containing an element capable of forming an alloy with lithium include a metal, a semimetal, or an alloy thereof. It should be understood that the term "alloy" as used herein refers to both alloys of two or more metals as well as alloys of one or more metals together with one or more semimetals. If an alloy has metallic properties as a whole, the alloy may contain a nonmetal element. In the texture of the alloy, a solid solution, a eutectic (eutectic mixture), an intermetallic compound or two or more thereof coexist. Examples of such metal or semimetal elements include, without being limited to, titanium (Ti), tin (Sn), lead (Pb), aluminum, indium (In), zinc (Zn), antimony (Sb), bismuth (Bi), gallium (Ga), germanium (Ge), arsenic (As), silver (Ag), hafnium (Hf), zirconium (Zr) yttrium (Y), and silicon (Si). Metal and semimetal elements of Group 4 or 14 in the long-form periodic table of the elements are preferable, and especially preferable are titanium, silicon and tin, in particular silicon. Examples of tin alloys include ones having, as a second constituent element other than tin, one or more elements selected from the group consisting of silicon, magnesium (Mg), nickel, copper, iron, cobalt, manganese, zinc, indium, silver, titanium (Ti), germanium, bismuth, antimony and chromium (Cr). Examples of silicon alloys include ones having, as a second constituent element other than silicon, one or more elements selected from the group consisting of tin, magnesium, nickel, copper, iron, cobalt, manganese, zinc, indium, silver, titanium, germanium, bismuth, antimony and chromium.

A further possible anode active material is silicon which is able to occlude and release lithium ions. The silicon may be used in different forms, e.g. in the form of nanowires, nanotubes, nanoparticles, films, nonporous silicon, powder of crystalline silicon or silicon nanotubes. The silicon may be deposited on a current collector. The current collector may be a metal wire, a metal grid, a metal web, a metal sheet, a metal foil or a metal plate. Preferred the current collector is a metal foil, e.g. a copper foil. Thin films of silicon may be deposited on metal foils by any technique known to the person skilled in the art, e.g. by sputtering techniques. One possibility of preparing Si thin film electrodes are described in R. Elazari et al.; Electrochem. Comm. 2012, 14, 21-24. It is also possible to use a silicon/carbon composite as anode active material according to the present invention. The carbon is preferably selected from conductive carbon materials like graphite, carbon black, carbon nanotubes, expanded graphite, graphene or mixtures thereof.

Other possible anode active materials are lithium ion intercalating oxides of Ti.

Preferably the anode active material present in the inventive secondary lithium ion battery is selected from carbonaceous material that can reversibly occlude and release lithium ions, particularly preferred the carbonaceous material that can reversibly occlude and release lithium ions is selected from crystalline carbon, hard carbon and amorphous carbon, in particular preferred is graphite. In another preferred embodiment the anode active material present in the inventive lithium ion secondary battery is selected from silicon that can reversibly occlude and release lithium ions, in particular silicon in form of thin films or silicon/carbon composites. In a further preferred embodiment the anode active material present in the inventive lithium ion secondary battery is selected from oxides of Ti which are able to occlude and release lithium ions.

The anode and cathode may be made by preparing an electrode slurry composition by dispersing the electrode active material, a binder, optionally a conductive material and a thickener, if desired, in a solvent and coating the slurry composition onto a current collector. The current collector may be a metal wire, a metal grid, a metal web, a metal sheet, a metal foil or a metal plate. Preferred the current collector is a metal foil, e.g. a copper foil or aluminum foil.

The inventive secondary lithium ion batteries may contain further constituents customary per se, for example output conductors, separators, housings, cable connections etc. Output conductors may be configured in the form of a metal wire, metal grid, metal mesh, expanded, metal, metal sheet or metal foil. Suitable metal foils are especially aluminum foils. Suited separators are for example glass fiber separators and polymer-based separators like polyolefin separators. The housing may be of any shape, for example cuboidal or in the shape of a cylinder. In another embodiment, inventive electrochemical cells have the shape of a prism. In one variant, the housing used is a metal-plastic composite film processed as a pouch.

The present invention therefore also further provides for the use of inventive secondary lithium ion batteries in devices, especially in mobile devices. Examples of mobile devices are vehicles, for example automobiles, bicycles, aircraft, or water vehicles such as boats or ships. Other examples of mobile devices are those which are portable, for example computers, especially laptops, telephones or electrical power tools, for example from the construction sector, especially drills, battery-driven screwdrivers or battery-driven tackers. The inventive electrochemical cells may also be used for stationary power storage.

The invention is illustrated by the following examples, which do not, however, restrict the invention.

### Cell preparation and measurements:

### 1. Synthesis of Propargylic Mesylates.

Primary and secondary methanesulfonates were synthesized from the corresponding alcohols using K₂CO₃ and catalytic quantities of (CH₃)₃NHCl in toluene (see following scheme 1). 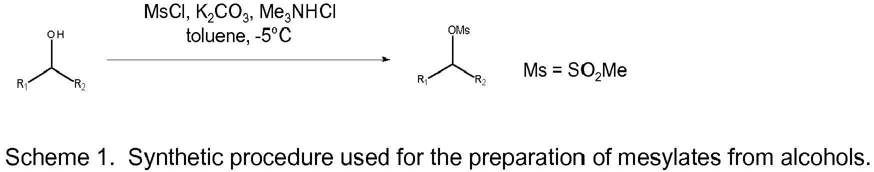 To a stirred solution of the respective alcohol (1 eq) in dry toluene (1.5 M) K₂CO₃ (1.15 eq) and trimethylamine hydrochloride (5 mol%) were added. After cooling down to -5 °C methanesulfonyl chloride (1.2 eq) was slowly added via addition funnel. The mixture was stirred at room temperature for few hours until complete conversion was achieved (GC-Analysis). The crude material was isolated after aqueous work up and purified by column chromatography and/or distillation. The purity of the substances was controlled via 1 HNMR and elemental analysis (EA).

### 1.1. 2-propynyl methanesulfonate (comparative)

Starting from 85 g (1.5 mol) propargyl alcohol, 122.6 g of crude material were obtained (theoretical yield 203.6 g). 60.4 gr where purified by column chromatography, obtaining 55 gr of product.

### 1.2. 1-methyl-2-propynyl methanesulfonate (inventive)

Starting from 120 g (1.7 mol) 3-butin-2-ol, 235 g of crude material where obtained (theoretical yield 254 g). 150 gr were purified by column chromatography, obtaining 128 gr of product.

### 2. Synthesis of propargylic carbonates

These materials were prepared following the standard preparation with methyl chloroformate. 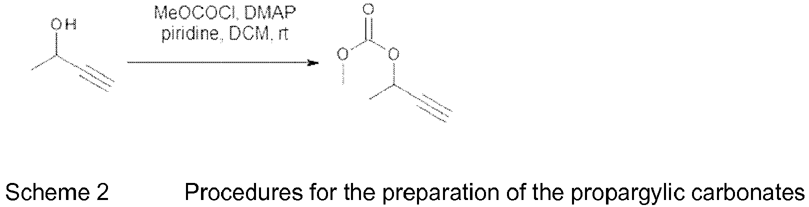 To a cooled (-5 °C) and stirred solution of 1 eq alcohol, 0.2 eq DMAP (dimethylaminopyridine) and 4 eq pyridine in DCM (dichloromethane) (10 eq). 4 eq methyl chloroformate were slowly added. After stirring for 24 h at room temperature, the reaction mixture was worked up with dilute hydrochloric acid solution, dried over MgS0₄ and concentrated. The desired carbonate was purified column chromatography and or by distillation.

### 2.1 2-propynyl methyl carbonate

Starting from 56 g (1.78 mol) propargyl alcohol, 55 g of crude material were obtained. After vacuum distillation 26.5 gr of clean product were obtained.

### 2.2 1-methyl-2-propynyl methyl carbonate

Starting from 30 g (0.45 mol) 3-butin-2-ol, 26.6 gr of clean product were obtained after purification by column chromatography.

### 2.3 1,1-dimethyl-2-propynyl methyl carbonate

1,1-di-methyl-2-propynyl methyl carbonate was prepared following a novel procedure described in Org. Lett. 2011, 13, 430-433 via a La(Oi-Pr)₃ catalyzed transesterification with dimethyl cabonate (Scheme 3)

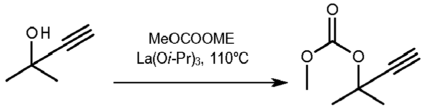

### 3. Cell tests

The additives were investigated towards film formation in coin cells (half cells). Graphite-coated tapes and metal lithium were used as electrodes. A glass-fiber filter separator (Whatmann GF/D) was used as the separator, which was soaked with 120 µl electrolyte. Coin type half cells were prepared with LiPF₆, which was dissolved in a 3:7 mixture of ethylene carbonate / ethyl-methyl carbonate yielding a 1 M LiPF₆ solution (LP 57). 2 wt.-% of additive was added to the electrolyte mixture. All cells were assembled in an argon-filled glove box (Unilab, MBraun) having oxygen and water levels below 0.1 ppm. Afterwards the test cells were transferred to a battery test station. Electrochemical cycling (discharging/charging) was done using a Maccor battery test system. The half cells were initially held at open circuit potential for 6 hours and subsequently discharged to 0.025 V. Afterwards the cells were discharged to a high voltage cutoff of 1.5 V. This test was performed at 0.01 C rate. Measurements were carried out at room temperature (25°C).

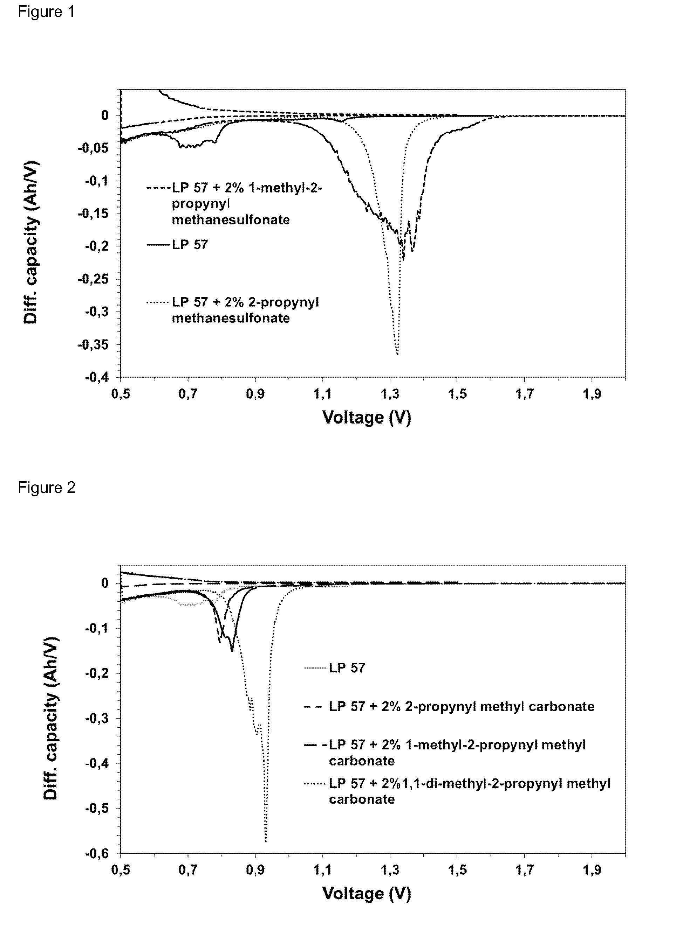

The differential capacity vs. voltage plots of coin cells (Li/graphite) containing 2 wt.-% 1-methyl-propynyl methanesulfonate or 2 wt.-% 2-propynyl methanesulfonate in a 1 M LiPF₆ 3:7 mixture of ethylene carbonate / ethyl-methyl carbonate are shown in Figure1.

The differential capacity vs. voltage plots of coin cells (Li/graphite) containing 2 wt.-% 2-propynyl methyl carbonate, 2 wt.-% 1-methyl-2-propynyl methyl carbonate or 2 wt.-% 1,1-dimethyl-2-propynyl methyl carbonate in a 1 M LiPF₆ 3:7 mixture of ethylene carbonate / ethyl-methyl carbonate are shown in Figure 2.

The substituted additives used for the modification of the SEI showed higher reduction potentials than the unsubstituted additives. This ensures that these compounds are reduced on the anode surface before the bulk electrolyte decomposes.

## Claims

1. An electrolyte composition containing (A)
(i) at least one aprotic organic solvent,
(ii) at least one conducting salt, and
(iii) at least one compound of formula (I), 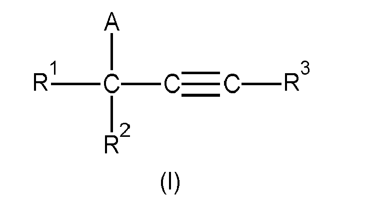 wherein
R¹ is selected from F, C₁-C₁₀ alkyl, C₂-C₁₀ alkenyl, C₂-C₁₀ alkinyl, C₃-C₁₀ cycloalkyl, C₆-C₁₄ aryl and C₅-C₁₄ heteroaryl, wherein alkyl, alkenyl, alkinyl, cycloalkyl, aryl, and heteroaryl may be substituted by one or more A, F, C₁-C₄ alkyl, phenyl, benzyl and/or C₁-C₄ alkyl substituted by one or more F,
R² is selected from H, F, C₁-C₁₀ alkyl, C₂-C₁₀ alkenyl, C₂-C₁₀ alkinyl, C₃-C₁₀ cycloalkyl, C₆-C₁₄ aryl, and C₅-C₁₄ heteroaryl, wherein alkyl, alkenyl, alkinyl, cycloalkyl, aryl and heteroaryl may be substituted by one or more A, F, C₁-C₄ alkyl, phenyl, benzyl and/or C₁-C₄ alkyl substituted by one or more F,
wherein R¹ and R² may form together with the joining C-atom a 5- to 7-membered saturated or unsaturated hydrocarbon cycle,
R³ is selected from H, and C₁-C₁₀ alkyl, wherein alkyl may be substituted by one or more F and/or A,
A is selected from OS(O)₂R⁴, OC(O)OR⁵ and OC(O)C(O)OR⁶, R⁴, R⁵ and R⁶ are selected from C₁-C₁₀ alkyl, C₂-C₁₀ alkenyl, C₂-C₁₀ alkinyl, C₃-C₁₀ cycloalkyl, C₆-C₁₄ aryl and C₅-C₁₄ heteroaryl, wherein alkyl, alkenyl, alkinyl, cycloalkyl, aryl and heteroaryl may be substituted by one or more OS(O)₂R⁷, OC(O)OR⁸, OC(O)C(O)OR⁹, F, C₁-C₄ alkyl, phenyl, benzyl and/or C₁-C₄ alkyl substituted by one or more F, and
R⁷, R⁸ and R⁹ are selected from C₁-C₁₀ alkyl,
(iv) optionally at least one further additive.

2. The electrolyte composition according to claim 1 to 4, wherein the at least one compound of formula (I) is selected from compounds of formula (I) with
R¹ is selected from F, C₁-C₆ alkyl, C₂-C₆ alkenyl, C₂-C₆ alkinyl, C₅-C₇ cycloalkyl, and phenyl, wherein alkyl, alkenyl, alkinyl, cycloalkyl, and phenyl may be substituted by one or more A, F, C₁-C₄ alkyl, phenyl and/or C₁-C₄ alkyl substituted by one or more F,
R² is selected from H, F, C₁-C₆ alkyl, C₂-C₆ alkenyl, C₂-C₆ alkinyl, C₅-C₇ cycloalkyl, and phenyl, wherein alkyl, alkenyl, alkinyl, cycloalkyl, and phenyl may be substituted by one or more A, F, C₁-C₄ alkyl, phenyl and/or C₁-C₄ alkyl substituted by one or more F,
wherein R¹ and R² may form a 5- or 6-membered saturated or unsaturated hydrocarbon cycle,
R³ is selected from H and C₁-C₆ alkyl, wherein alkyl may be substituted by one or more F and/or A,
A is selected from OS(O)₂R⁴, OC(O)OR⁵ and OC(O)C(O)OR⁶,
R⁴, R⁵ and R⁶ are selected from C₁-C₆ alkyl, C₂-C₆ alkenyl, C₂-C₆ alkinyl, C₅-C₇ cycloalkyl, and phenyl, wherein alkyl, alkenyl, alkinyl, cycloalkyl, and phenyl may be substituted by one or more OS(O)₂R⁷, OC(O)OR⁸, OC(O)C(O)OR⁹, F, C₁-C₄ alkyl, phenyl and/or C₁-C₄ alkyl substituted by one or more F, and
R⁷, R⁸ and R⁹ are selected from C₁-C₆ alkyl.

3. The electrolyte composition according to claim 1 or 2, wherein the at least one compound of formula (I) is selected from compounds of formula (I) wherein A is OS(O)₂R⁴.

4. The electrolyte composition according to any of claims 1 to 2, wherein the at least one compound of formula (I) is selected from compounds of formula (I) wherein A is OC(O)OR⁵.

5. The electrolyte composition according to any of claims 1 to 2, wherein the at least one compound of formula (I) is selected from compounds of formula (I) wherein A is OC(O)C(O)OR⁶.

6. The electrolyte composition according to any of claims 1 to 4, wherein the at least one compound of formula (I) is selected from 1-methyl-propargyl methanesulfonate, 1-ethyl-propargyl methanesulfonate, 1-n-propyl-propargyl methanesulfonate, 1-i-propyl-propargyl methanesulfonate, 1-cyclohexyl-propargyl methanesulfonate, 1-methyl-propargyl methylcarbonate, 1-ethyl-propargyl methylcarbonate, 1-n-propyl-propargyl methylcarbonate, 1-i-propyl-propargyl methylcarbonate, and 1-cyclohexyl-propargyl methylcarbonate.

7. The electrolyte composition according to any of claims 1 to 6, wherein the at least one aprotic organic solvent (i) is selected from
(a) cyclic and noncyclic organic carbonates, which may be partly halogenated,
(b) di-C₁-C₁₀-alkylethers, which may be partly halogenated,
(c) di-C₁-C₄-alkyl-C₂-C₆-alkylene ethers and polyethers, which may be partly halogenated,
(d) cyclic ethers, which may be partly halogenated,
(e) cyclic and acyclic acetales and ketales, which may be partly halogenated,
(f) orthocarboxylic acids esters, which may be partly halogenated, and
(g) cyclic and noncyclic esters of carboxylic acids, which may be partly halogenated
(h) cyclic and noncyclic sulfones, which may be partly halogenated,
(i) cyclic and noncyclic nitriles and dinitriles, which may be partly halogenated, and
(j) ionic liquids, which may be partly halogenated.

8. The electrolyte composition according to any of claims 1 to 7, wherein the conducting salt (ii) is selected from the group consisting of
• Li[F₆₋ₓP(C_{y}F_{2y+1})ₓ], wherein x is an integer in the range from 0 to 6 and y is an integer in the range from 1 to 20;
• Li[B(R¹⁰)₄], Li[B(R¹⁰)₂(OR¹¹O)] and Li[B(OR¹¹O)₂],
wherein each R¹⁰ is independently from each other selected from F, Cl, Br, I, C₁-C₄ alkyl, C₂-C₄ alkenyl, C₂-C₄ alkinyl, OC₁-C₄ alkyl, OC₂-C₄ alkenyl, and OC₂-C₄ alkinyl, wherein alkyl, alkenyl, and alkinyl may be substituted by one or more OR¹², wherein R¹² is selected from C₁-C₆ alkyl, C₂-C₆ alkenyl, and C₂-C₆ alkinyl, and
wherein (OR¹¹O) is a bivalent group derived from a 1,2- or 1,3-diol, from a 1,2- or 1,3-dicarboxlic acid or from a 1,2- or 1,3-hydroxycarboxylic acid, wherein the bivalent group forms a 5- or 6-membered cycle via the both oxygen atoms with the central B-atom;
• salts of the general formula Li[X(CₙF₂ₙ₊₁SO₂)ₘ], where m and n are defined as follows:
m = 1 when X is selected from oxygen and sulfur,
m = 2 when X is selected from nitrogen and phosphorus,
m = 3 when X is selected from carbon and silicon, and
n is an integer in the range from 1 to 20,
• LiClO₄; LiAsF₆; LiCF₃SO₃; Li₂SiF₆; LiSbF₆; LiAlCl₄, lithium tetrafluoro (oxalato) phosphate; and lithium oxalate.

9. The electrolyte composition according to any of claims 1 to 8, wherein the electrolyte composition contains at least one further additive (iv) which is selected from the group consisting of vinylene carbonate and its derivatives, vinyl ethylene carbonate and its derivatives, methyl ethylene carbonate and its derivatives, lithium (bisoxalato) borate, lithium difluoro (oxalato) borate, lithium tetrafluoro (oxalato) phosphate, lithium oxalate, 2-vinyl pyridine, 4-vinyl pyridine, cyclic exo-methylene carbonates, sultones, cyclic and acyclic sulfonates, cyclic and acyclic sulfites, cyclic and acyclic sulfinates, organic esters of inorganic acids, acyclic and cyclic alkanes having a boiling point at 1 bar of at least 36 °C, and aromatic compounds, optionally halogenated cyclic and acyclic sulfonylimides, optionally halogenated cyclic and acyclic phosphate esters, optionally halogenated cyclic and acyclic phosphines, optionally halogenated cyclic and acyclic phosphites including, optionally halogenated cyclic and acyclic phosphazenes, optionally halogenated cyclic and acyclic silylamines, optionally halogenated cyclic and acyclic halogenated esters, optionally halogenated cyclic and acyclic amides, optionally halogenated cyclic and acyclic anhydrides, optionally halogenated organic heterocycles.

10. The electrolyte composition according to any of claims 1 to 9, wherein the electrolyte composition contains
(i) from 60 to 99.9 wt.-% of at least one aprotic organic solvent,
(ii) from 0.1 to 25 wt.-% of at least one conducting salt,
(iii) from 0.01 to 5 wt.-% of at least one compound of formula (I), and
(iv) from 0 to 10 wt.-% of at least one further additive,
based on the total weight of the electrolyte composition.

11. The use of at least one compound of formula (I) 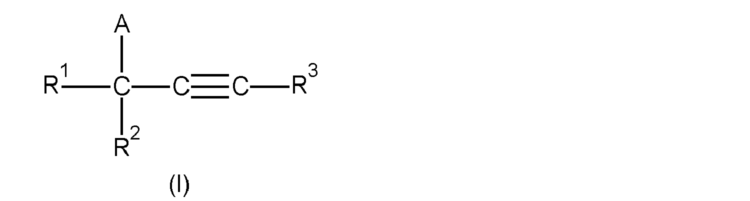 wherein
R¹ is selected from F, C₁-C₁₀ alkyl, C₂-C₁₀ alkenyl, C₂-C₁₀ alkinyl, C₃-C₁₀ cycloalkyl, C₆-C₁₄ aryl and C₅-C₁₄ heteroaryl, wherein alkyl, alkenyl, alkinyl, cycloalkyl, aryl, and heteroaryl may be substituted by one or more A, F, C₁-C₄ alkyl, phenyl, benzyl and/or C₁-C₄ alkyl substituted by one or more F,
R² is selected from H, F, C₁-C₁₀ alkyl, C₂-C₁₀ alkenyl, C₂-C₁₀ alkinyl, C₃-C₁₀ cycloalkyl, C₆-C₁₄ aryl, and C₅-C₁₄ heteroaryl, wherein alkyl, alkenyl, alkinyl, cycloalkyl, aryl and heteroaryl may be substituted by one or more A, F, C₁-C₄ alkyl, phenyl, benzyl and/or C₁-C₄ alkyl substituted by one or more F,
wherein R¹ and R² may form together with the joining C-atom a 5- to 7-membered saturated or unsaturated hydrocarbon cycle,
R³ is selected from H, and C₁-C₁₀ alkyl, wherein alkyl may be substituted by one or more F and/or A,
A is selected from OS(O)₂R⁴, OC(O)OR⁵ and OC(O)C(O)OR⁶,
R⁴, R⁵ and R⁶ are selected from C₁-C₁₀ alkyl, C₂-C₁₀ alkenyl, C₂-C₁₀ alkinyl, C₃-C₁₀ cycloalkyl, C₆-C₁₄ aryl and C₅-C₁₄ heteroaryl, wherein alkyl, alkenyl, alkinyl, cycloalkyl, aryl and heteroaryl may be substituted by one or more OS(O)₂R⁷, OC(O)OR⁸, OC(O)C(O)OR⁹, F, C₁-C₄ alkyl, phenyl, benzyl and/or C₁-C₄ alkyl substituted by one or more F, and
R⁷, R⁸ and R⁹ are selected from C₁-C₁₀ alkyl,
as additive for electrolytes in lithium ion electrochemical cells.

12. A secondary lithium ion battery comprising
(A) the electrolyte composition according to any of claims 1 to 10,
(B) at least one cathode comprising a cathode active material, and
(C) at least one anode comprising an anode active material.

13. The secondary lithium ion battery according to claim 12, wherein the anode active material contains lithium ion intercalating carbon.

14. The secondary lithium ion battery according to claim 12 or 13 wherein the at least one cathode active material comprises a material capable of occluding and releasing lithium ions selected from lithiated transition metal phosphates of olivine structure; lithium ion intercalating transition metal oxides with layer structure; and lithiated transition metal mixed oxides of spinel structure.

15. The secondary lithium ion battery according to any of claims 12 to 15, wherein wherein the at least one cathode active material is selected from LiCoPO₄; transition metal oxides with layer structure of general formula Li_{(1+z)}[NiₐCo_{b}Mn_{c}]_{(1-z)}O₂₊ₑ wherein z is 0 to 0.3, a, b and c may be same or different and are independently 0 to 0.8 wherein a + b + c = 1; and -0.1 ≤ e ≤ 0.1; and lithiated transition metal mixed oxides of spinel structure of general formula Liᵢ₊ₜM₂₋ₜO_{4-d} wherein d is 0 to 0.4, t is 0 to 0.4, while more than 60 mol% of M is manganese and further M's, from which not more than 30 mol% is chosen, are one or more metals from groups 3 to 12 of the periodic table.
